# EUROPÄISCHE PATENTSCHRIFT

(11) **EP 1 928 708 B1**
(45) Veröffentlichungstag und Bekanntmachung des Hinweises auf die Patenterteilung: **07.04.2010**
(21) Anmeldenummer: 06805831.2
(22) Anmeldetag: 25.09.2006
(51) Int. Cl.: B60R 21/16

(54) **GASSACKANORDNUNG FÜR KRAFTFAHRZEUGE**
AIRBAG DEVICE FOR MOTOR VEHICLES
DISPOSITIF DE POCHE A GAZ POUR VEHICULES AUTOMOBILES

(30) Priorität: 27.09.2005 DE 102005046267
(43) Veröffentlichungstag der Anmeldung: 11.06.2008
(73) Patentinhaber: AUTOLIV DEVELOPMENT AB, 447 83 Vargarda (SE)
(72) Erfinder: MANSSON, Johan, S-504 58 Boras (SE); ÖHRVALL, Henrik, S-441 92 Alingsas (SE); KJELL, Fredrik, S-441 40 Alingsas (SE); PALO, Anders, SE-41313 Göteborg (SE)
(74) Vertreter: Schön, Thilo
(86) Internationale Anmeldenummer: PCT/EP2006/009271
(87) Internationale Veröffentlichungsnummer: WO 2007/036336

(56) Entgegenhaltungen:
- WO-A-00/40439
- DE-A1- 4 223 620
- DE-A1- 10 024 293
- DE-C1- 10 119 351
- US-A- 5 575 497

## Beschreibung

### Technisches Gebiet der Erfindung

Die Erfindung betrifft eine Gassackanordnung für Kraftfahrzeuge nach dem Oberbegriff des Anspruchs 1.

In der Technik sind sogenannte Seitengassäcke für Kraftfahrzeuge bekannt, welche entweder im Sitz oder in der Seitenstruktur des Kraftfahrzeugs unterhalb der Seitenscheibe angeordnet sind. Solche Seitengassäcke haben die Aufgabe, den Kopf und den Thorax des Insassen bei einem Seitenaufprall zu schützen. Da sich der Kopf und zumeist auch ein Teil des Thorax des Insassen oberhalb der Türbrüstung der Seitentür, also auf Höhe der Seitenscheibe befinden, stützt sich der Seitengassack in der Regel an der Seitenscheibe und zumeist auch teilweise an der B-Säule ab.

Insbesondere bei Cabrios und Roadstern - teilweise auch bei Coupes - tritt das Problem auf, dass sie in der Regel keine B-Säule aufweisen und häufig mit heruntergelassener Seitenscheibe gefahren werden. Somit steht keine Abstützfläche auf Höhe des Kopfes des Insassen zur Verfügung.

### Stand der Technik

Die gattungsbildende DE 100 24 293 A1 schlägt deshalb vor, das den nicht entfalteten Gassack aufnehmende Gehäuse ein Stück unterhalb der Türbrüstung anzuordnen und einen Stützabschnitt vorzusehen, in den der expandierte Gassack aufgrund des Innendrucks gedrückt und somit selbsttragend abgestützt ist.

### Gegenstand der Erfindung

Die vorliegende Erfindung stellt sich die Aufgabe, eine gattungsgemäße Gassackanordnung dahingehend weiterzubilden, dass der Schutz des Insassen bei einem Seitenaufprall weiter verbessert wird.

Diese Aufgabe wird durch eine Gassackanordnung mit den Merkmalen des Anspruchs 1 gelöst.

Bei der erfindungsgemäßen Gassackanordnung ist das den nicht expandierten Gassack aufnehmende Gehäuse derart unterhalb der Oberkante der Türbrüstung angeordnet, dass sich zwischen Austrittsöffnung des Gehäuses und Oberkante der Türbrüstung eine Abstützfläche für den Gassack befindet.
Diese Abstützfläche kann Teil der Tür-Innenverkleidung oder Teil des Gehäuses sein. Der Gassack selbst weist eine die Prallfläche aufweisende Hauptkammer und eine Abstützkammer auf, welche sich zwischen Hauptkammer und Abstützfläche befindet. Die Hauptkammer stützt sich also nicht unmittelbar, sondern nur mittelbar mittels der Abstützkammer an der Abstützfläche ab. Hierdurch wird mit sehr einfachen Mitteln im Bereich der Abstützfläche ein recht dicker Gassack zur Verfügung gestellt, wodurch die Abstützwirkung wesentlich verbessert wird.

Durch die Zweiteilung des Gassacks im Bereich der Abstützfläche erhält man weiterhin die Möglichkeit, die Abstützkammer mit geringerer Höhe als die Hauptkammer auszubilden, was bei gleicher Gasgeneratorleistung zu einer entsprechend schnelleren Befüllung führt, ohne Einbußen hinsichtlich der Leistungsfähigkeit des Systems hinnehmen zu müssen. Weiterhin kann aufgrund der erfindungsgemäßen Ausgestaltung der Gassackanordnung erreicht werden, dass sich die Abstützfläche zu einem gewissen Grade in Richtung des Insassen neigt, was ebenfalls zu einer Verbesserung der Rückhaltewirkung führt, insbesondere durch eine frühe Anbindung des Schulter- und Kopfbereichs des Insassen an die Prallfläche des Gassacks.

Bevorzugte Ausführungsformen der Erfindung ergeben sich aus den Unteransprüchen, sowie aus dem nun mit Bezug auf die Figuren näher dargestellten Ausführungsbeispiel. Hierbei zeigen:

### Kurzbeschreibung der Zeichnungen

- Figur 1: Eine schematische Seitenansicht einer Gassackanordnung,
- Figur 2: einen Schnitt entlang der Ebene A-A aus Figur 1 und
- Figur 3: eine Gewebelage eines Gassacks.

### Beschreibung bevorzugter Ausführungsformen

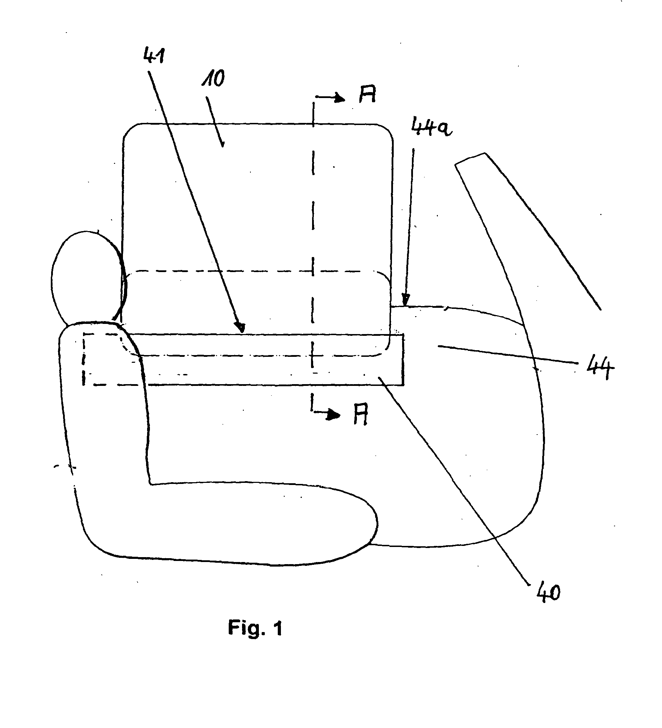

Figur 1 zeigt schematisch den vorderen Sitzbereich eines Cabrios oder Roadsters in einer Ansicht von innen. Auf der Innenseite der Tür 44 unterhalb der Oberkante 44a der Türbrüstung ist das Gehäuse 40 angeordnet, das den Gassack 10 in seinem nicht entfalteten Zustand vollständig aufnimmt. Figur 1 zeigt den Zustand, in dem der Gassack 10 vollständig entfaltet ist, wobei sich ein Großteil des Gassacks oberhalb der Oberkante 44a der Türbrüstung befindet. Das Gehäuse 40 kann ein integraler Bestandteil der Türinnenverkleidung sein. Im oder am Gehäuse 40 ist weiterhin ein Gasgenerator angeordnet (in Figur 1 nicht dargestellt).

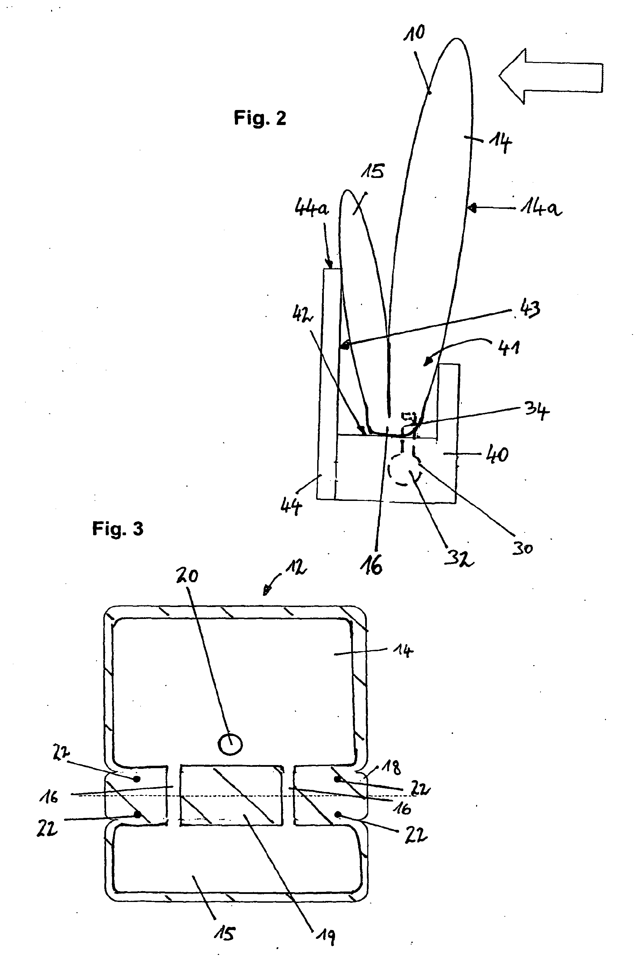

Aufbau und Funktion der Gassackanordnung sieht man am besten mit Blick auf die Figur 2, welche ein Schnitt entlang der Ebene A-A in Figur 1 ist: Der Gassack 10 weist eine Hauptkammer 14 und eine Abstützkammer 15 auf, welche mittels Füllkammern 16 miteinander verbunden sind. Das Gehäuse 40 ist derart unterhalb der Oberkante 44a der Türbrüstung angeordnet, dass sich zwischen dem Gehäuseboden 42, an dem der Gassack 10 befestigt ist, und der Oberkante 44a der Türbrüstung eine Abstützfläche befindet, die hier durch einen Abschnitt der Innenseite 43 der Tür gebildet ist. Die Abstützfläche könnte beispielsweise aber auch Teil des Gehäuses 40 sein. Zweckmäßigerweise befindet sich die Austrittsöffnung 41 des Gehäuses unterhalb der Oberkante 44a der Türbrüstung, so dass sich zumindest ein Abschnitt der Abstützfläche oberhalb der Austrittsöffnung 41 des Gehäuses 40 befindet.

Wie man anhand Figur 2 sieht, stützt sich die Abstützkammer 15 an der Abstützfläche ab, die Hauptkammer 14 wiederum stützt sich an der Abstützkammer ab. Prallt der Insasse auf die Prallfläche 14a der Hauptkammer 14, so wird die eingeleitete Kraft über die Hauptkammer und die Abstützkammer und die Tür 44 eingeleitet. Die Anordnung ist dabei so gewählt, dass sich die Prallfläche 14a der Hauptkammer 14 ausgehend vom Gehäuseboden 42 in Richtung des Insassen neigt, so dass eine Anbindung des Insassen zu einem frühen Zeitpunkt erfolgt. Um für eine ausreichende Abstützung der Hauptkammer 14 zu sorgen, muss die Abstützkammer 15 also im eingebauten Zustand der Gassackanordnung fahrzeugaußenseitig in Bezug auf die Hauptkammer 14 angeordnet sein.

In die Hauptkammer 14 ragt der Auslassabschnitt 34 des Gasgenerators 30.
Der Erzeugungsabschnitt 32 des Gasgenerators 30 befindet sich außerhalb des Gassacks unterhalb des Gehäusebodens 42. Das eintretende Gas füllt zunächst die Hauptkammer 14, so dass die aufgeblasene Hauptkammer zu einem frühen Zeitpunkt aufgerichtet ist und zum Auffangen des Insassen bereitsteht. Von der Hauptkammer 14 strömt weiterhin Gas über die Füllkammern 16 in die Abstützkammer 15, die sich je nach Ausgestaltung der Füllkammern 16 gleichzeitig mit der Hauptkammer 14 oder nach der Hauptkammer 14 entfaltet und den Raum zwischen Hauptkammer 14 und Abstützfläche zumindest teilweise ausfüllt.

Die Figur 3 zeigt eine ausgebreitete erste Gewebelage 12 des Gassacks 10. Der gesamte Gassack 10 kann aus zwei deckungsgleichen Gewebelagen zusammengenäht sein, oder der Gassack 10 ist einstückig ausgebildet, wobei zwei Gewebelagen, die ebenfalls deckungsgleich sind, über nicht aufblasbare Bereiche 18 miteinander verwoben sind. Im Fall eines genähten Gassacks, sind die beiden Gewebelagen im nicht aufblasbaren Bereich 18 zumindest abschnittsweise miteinander vernäht. Der nicht aufblasbare Bereich 18 ist schraffiert dargestellt. Man sieht, dass die Füllkammern 16 als schlauchartige Bereiche in einem außerhalb der Füllkammern 16 nicht aufblasbaren Bodenbereich 19 ausgebildet sind, welcher weiterhin Befestigungslöcher 22 zum Befestigen des Gassacks 10 am Gehäuseboden 42 aufweist. Durch die gewählte Ausgestaltung wird die Herstellung des Gassacks sehr einfach und erfordert nicht wesentlich mehr Aufwand als ein entsprechender Einkammer-Gassack. Befüllt wird der Gassack durch den Gasgenerator, welcher durch die Einlassöffnung 20 in die Hauptkammer 14 ragt.

Im eingebauten Zustand des Gassacks wird der Bodenbereich 19 mit dem Gehäuseboden 42 verbunden und die beiden Kammern erstrecken sich gefaltet in Richtung der Austrittsöffnung 41. Die Kammern können gemeinsam oder getrennt voneinander zusammengefaltet sein.

Grundsätzlich ist auch denkbar, Hauptkammer und Abstützkammer vollständig separat auszubilden und durch separate Gasgeneratoren zu füllen, was jedoch zu einem erheblichen Mehraufwand und auch zu einem größeren Platzbedarf innerhalb der Seitenstruktur des Kraftfahrzeugs führt.

### Bezugszeichenliste

- 10: Gassack
- 12: erste Gewebelage
- 14: Hauptkammer
- 14a: Prallfläche
- 15: Abstützkammer
- 16: Füllkammer
- 18: nicht aufblasbarer Bereich
- 20: Einlassöffnung
- 22: Befestigungslöcher
- 30: Gasgenerator
- 32: Erzeugungsabschnitt
- 34: Auslassabschnitt
- 40: Gehäuse
- 41: Austrittsöffnung
- 42: Gehäuseboden
- 43: Innenseite der Tür
- 44: Tür
- 44a: Oberkante der Türbrüstung

## Patentansprüche

1. Seitengassackanordnung für Kraftfahrzeuge mit wenigstens einem eine Prallfläche (14a) für den Fahrzeuginsassen aufweisenden Gassack (10), der im zusammengefalteten Zustand in einem sich unterhalb der Oberkante (44a) der Türbrüstung der Fahrzeugtür befindenden Gehäuse (40) angeordnet ist und im aufgeblasenen Zustand zumindest bereichsweise eine Schutzposition oberhalb der Türbrüstung einnimmt, wobei sich die Prallfläche (14a) im wesentlichen parallel zur Fahrzeugtür erstreckt,
**dadurch gekennzeichnet, dass** sich unterhalb der Oberkante (44a) der Türbrüstung eine Abstützfläche für den Gassack befindet, und dass der Gassack eine Hauptkammer (14) und eine Abstützkammer (15) aufweist, wobei die Prallfläche (14a) der Hauptkammer (14) zugeordnet ist und sich die Abstützkammer (15) im aufgeblasenen Zustand zwischen Hauptkammer (14) und Abstützfläche befindet und sich zumindest abschnittsweise an der Abstützfläche abstützt, so dass Kraft über die Hauptkammer (14) und die Abstützkammer (15) in die Tür (44) eingeleitet wird, wenn ein Insasse auf die Prallfläche (14a) der Hauptkammer (14) prallt.

2. Seitengassackanordnung nach Anspruch 1, **dadurch gekennzeichnet, dass** Hauptkammer (14) und Abstützkammer (15) über wenigstens eine Füllkammer (16) miteinander verbunden sind und mittels eines gemeinsamen Gasgenerators (30) gefüllt werden.

3. Seitengassackanordnung nach Anspruch 2, **dadurch gekennzeichnet, dass** der Gasgenerator (30) unmittelbar mit der Hauptkammer (14) verbunden sind.

4. Seitengassackanordnung nach einem der vorangehenden Ansprüche, **dadurch gekennzeichnet, dass** der gesamte Gassack im wesentlichen aus zwei randseitig verbundenen Gewebelagen besteht.

5. Seitengassackanordnung nach einem der vorangehenden Ansprüche, **dadurch gekennzeichnet, dass** die Abstützkammer (15) eine geringere Höhe als die Hauptkammer (14) aufweist.

6. Seitengassackanordnung nach einem der vorangehenden Ansprüche, **dadurch gekennzeichnet, dass** die Abstützfläche ein Teil der Innenseite der Tür (44) ist.

## Claims

1. Side air bag system for motor vehicles, with an air bag (10) having at least one impact surface (14a) for the vehicle occupant, the air bag in the non-inflated state being arranged in a housing (40) located below an upper edge (44a) of a windowsill of a vehicle door, and in the inflated state adopting a protective position that is at least partly above the windowsill, while the impact surface (14a) extends essentially parallel to the vehicle door, **characterised in that** below the upper edge (44a) of the windowsill there is a supporting surface for the air bag, and that the air bag has a main chamber (14) and a supporting chamber (15), the impact surface (14a) being assigned to the main chamber (14) and the supporting chamber (15), in the inflated state, being positioned between the main chamber (14) and the supporting surface and being supported at least in part by the supporting surface, so that force is introduced into the door (44) via the main chamber (14) and the supporting chamber (15), when a vehicle occupant impacts on the impact surface (14a) of the main chamber (14).

2. Side air bag system according to claim 1, **characterised in that** the main chamber (14) and the supporting chamber (15) are linked by at least one filling chamber (16) and are filled by a common gas generator (30).

3. Side air bag system according to claim 2, **characterised in that** the gas generator (30) is linked directly to the main chamber (14).

4. Side air bag system according to one of the preceding claims, **characterised in that** the entire air bag essentially consists of two layers of fabric joined at their edges.

5. Side air bag system according to one of the preceding claims, **characterised in that** the supporting chamber (15) has a lower height than the main chamber (14).

6. Side air bag system according to one of the preceding claims, **characterised in that** the supporting surface is part of the interior side of the vehicle door (44).

## Revendications

1. Dispositif de poche à gaz latérale pour des véhicules automobiles avec au moins une poche à gaz (10) présentant une surface d'impact (14a) pour l'occupant du véhicule, qui est disposé à l'état replié dans un boîtier (40) se trouvant au-dessous de l'arête supérieure (44a) de l'appui de la porte de véhicule et occupe à l'état gonflé au moins par endroits une position de protection au-dessus de l'appui de porte, la surface d'impact (14a) s'étendant essentiellement parallèlement à la porte de véhicule, **caractérisé en ce qu'**au-dessous de l'arête supérieure (44a) de l'appui de porte se trouve une surface d'appui pour la poche à gaz et **en ce que** la poche à gaz présente une chambre principale (14) et une chambre d'appui (15), la surface d'impact (14a) étant associée à la chambre principale (14) et la chambre d'appui (15) se trouvant à l'état gonflé entre la chambre principale (14) et la surface d'appui et s'appuyant au moins par zones sur la surface d'appui de sorte que la force soit appliquée via la chambre principale (14) et la chambre d'appui (15) sur la porte (44) quand un occupant heurte la surface d'impact (14a) de la chambre principale (14).

2. Dispositif de poche à gaz latérale selon la revendication 1, **caractérisé en ce que** la chambre principale (14) et la chambre d'appui (15) sont reliées l'une à l'autre par au moins une chambre de remplissage (16) et sont remplies au moyen d'un générateur à gaz (30) commun.

3. Dispositif de poche à gaz latérale selon la revendication 2, **caractérisé en ce que** le générateur à gaz (30) est relié directement à la chambre principale (14).

4. Dispositif de poche à gaz latérale selon l'une quelconque des revendications précédentes, **caractérisé en ce que** l'ensemble de la poche à gaz se compose essentiellement de deux couches de tissu reliées par leur(s) bord(s).

5. Dispositif de poche à gaz latérale selon l'une quelconque des revendications précédentes, **caractérisé en ce que** la chambre d'appui (15) présente une hauteur plus petite que la chambre principale (14).

6. Dispositif de poche à gaz latérale selon l'une quelconque des revendications précédentes, **caractérisé en ce que** la surface d'appui est une partie du côté intérieur de la porte (44).
